# EUROPEAN PATENT SPECIFICATION

(11) **EP 2 557 443 B1**
(45) Date of publication and mention of the grant of the patent: **05.03.2014**
(21) Application number: 11177345.3
(22) Date of filing: 12.08.2011
(51) Int. Cl.: G02B 6/44

(54) **Cable enclosure**
Kabelgehäuse
Fermeture de câble

(43) Date of publication of application: 13.02.2013
(73) Proprietor: CCS Technology, Inc., Wilmington, DE 19803 (US)
(72) Inventor: Breuer-Heckel, Mike, 44143 Dortmund (DE); Osoba, Markus, 58300 Wetter (DE); Kittler, Lars, 58239 Schwerte (DE); Figge, Axel, 58099 Hagen (DE); Thibault, Simon, 58099 Hagen (DE); Kupczyk, Andreas, 58099 Hagen (DE)
(74) Representative: Sturm, Christoph

(56) References cited:
- EP-A1- 0 942 303
- WO-A1-97/02637
- WO-A1-97/41474
- WO-A1-99/56370
- US-A1- 2009 057 008

## Description

The present patent application relates to a cable closure in accordance with the preamble of claim 1.

Cable closures are used in telecommunication cable networks, e.g. in fiber optic and copper cable networks, for protecting spliced joints at connection points between two telecommunication cables and for protecting branch points or splitting points of telecommunication cables. In this case, the cable closures need to ensure the continuity of the telecommunication cables as though the telecommunication cables had not been interrupted.

The product catalog "Accessories for Fiber Optic Networks", Edition 1, page 75, Corning Cable Systems, 2001 discloses cable closures firstly in the form of inline cable closures and secondly in the form of dome cable closures, which all have a housing which defines an interior of the cable closure and seals off the interior thereof from the outside. Conventionally, assemblies for connecting, namely for splicing, telecommunications conductors guided in telecommunications cables are arranged in the interior defined by the housing of the cable closure.

In the case of cable closures in the form of dome cable closures, the housing is formed by a dome-like covering body and a sealing body, the sealing body defining cable insertion regions, which are sealed off on one side of the dome-like covering body and via which all of the cables can be inserted into the interior of the cable closure.

In the case of cable closures in the form of inline cable closures, cable insertion regions which are sealed off on two opposite sides of the covering body are formed for inserting cables into the interior of the cable closure, with the result that inline cable closures can be installed in one line with the cables.

DE 20 2010 006 582 U1 discloses an inline cable closure, having a housing, which delimits an interior of the cable closure and seals off the cable closure toward the outside, the housing comprising a covering body, the covering body comprises shells and provides on mutually opposite sides of the same cable insertion regions for inserting cables into the interior of the cable closure and/or for passing cables out of the interior of the cable closure. According to DE 20 2010 006 582 U1 deformable sealing elements are positioned at the mutually opposite sides of the covering body in the region of the cable insertion regions of the shells, wherein each of the sealing elements is positioned between barrier walls of the respective shell, namely between a barrier wall facing the interior of the cable closure and a barrier wall remote from the interior of the cable closure.

EP 1 970 737 A1 discloses and a sealing body of a dome cable closures. This sealing body comprises sealing body segments with gel-like sealing elements having conically shaped recesses.

Against this background, the present patent application provides a novel cable closure having improved sealing properties. This is accomplished by the features that the sealing elements positioned in the first shell are made from a first sealing material having a first, preferably a relative low, hardness, and that the sealing elements positioned in a second shell are made at least partially from a second sealing material having a second, preferably a relative high, hardness.

The cable closure according to the present application has improved sealing properties with respect to all conditions, e.g. with respect to pressure conditions above or below atmospheric pressure and with respect to different temperature conditions.

Preferably, the sealing elements positioned in a first, preferably lower shell are made from a first sealing material having a Shore 000 hardness smaller than 35, preferably between 25 and 35, or from a second sealing material having a Shore 000 hardness between 35 and 45 determined under ASTM D 2240 at a temperature of 23°C. The sealing elements positioned in a second, preferably upper shell are made at least partially from a third sealing material having a Shore 000 hardness larger than 45, preferably between 45 and 55, determined under ASTM D 2240 at a temperature of 23°C. Such a combination of different sealing materials provides further improved sealing properties.

The sealing material having a Shore 000 hardness smaller than 45 has preferably an ultimate elongation larger than 600%, and that the sealing material having a Shore 000 hardness larger than 45 determined have preferably an ultimate elongation smaller than 600%.

According to a further preferred development, the sealing elements of the shells being positioned at the mutually opposite sides of the covering body comprise in the area of the cable insertion regions recesses, each recess having at least three subsections, namely a first subsection and a second subsection both having a generally narrowing cross section, preferably both being conically shaped, in such a way that a tapered end of the first subsection is facing a tapered end of the second subsection, and a third subsection preferably being almost cylindrically shaped extending between the tapered end of the first subsection and the tapered end of the second subsection. When sealing a cable, the material of the sealing elements can be pushed into the recesses thereby avoiding a so called "Eye-ball effect". The defined geometry of the recesses allows the handling and sealing of cables with different cable diameters. The third subsection of the recesses holds a defined sealing pressure on the cable. The recesses in combination with the different sealing materials provide further improved sealing properties.

Exemplary embodiments of the invention will be explained in more detail, without any restriction being imposed, with reference to the drawing, in which:
- Figure 1: shows a perspective view of a cable closure in form of an inline cable closure in a closed status of the same;
- Figure 2: shows a perspective view of the inline cable closure shown in figure 1 in an opened status of the same;
- Figure 3: shows a first, lower shell of a preferred embodiment of an inline cable closure according to the invention;
- Figure 4: shows a second, upper shell of a preferred embodiment of an inline cable closure according to the invention;
- Figure 5: shows an alternative second, upper shell of a preferred embodiment of an inline cable closure according to the invention;
- Figure 6: shows another alternative second, upper shell of a preferred embodiment of an inline cable closure according to the invention;
- Figure 7: shows an alternative first, lower shell of a preferred embodiment of an inline cable closure according to the invention;
- Figure 8: shows another alternative first, lower shell of a preferred embodiment of an inline cable closure according to the invention;
- Figure 9: a detail of a recess formed in a sealing element of a closure.

The present invention relates to a cable closure 10, which in the preferred exemplary embodiment shown is an inline cable closure comprising a housing which is formed by a covering body 13 composed of two shells 11 and 12. In the embodiment shown, the shells 11 and 12 are half-shells and the half-shell 11 is a so-called first, lower shell and the half-shell 12 is a so-called second, upper shell of the covering body 13, which together define an interior 14 of the inline cable closure 10. Cable insertion regions 17 are formed on mutually opposite sides 15 and 16 of the inline cable closure 10 or the covering body 13, with it being possible for cables to be inserted into the interior 14 of the inline cable closure 10 or passed out of the interior.

In the embodiment shown, in each case two cable insertion regions 17 for inserting in each case one cable into the interior 14 of the inline cable closure 10 are formed on both mutually opposite sides 15 and 16 of the covering body 13.

In the shown embodiment, the two half-shells 11 and 12 are hinged together at first longitudinal sides 18, 19 of the same. The half-shells 11 and 12 can be pivoted with respect to each other around a hinge 20 by which the two half-shells 11 and 12 are fixed to each other at the first longitudinal sides 18, 19 of the same.

When the inline cable closure 10 is closed, the other second longitudinal sides 21, 22 of the two half-shells 11 and 12 can be secured to each other by a closing mechanism 23, which is in the shown embodiment assigned to the lower half-shell 11.

In order to ensure that the cables to be inserted into the interior 14 of the inline cable closure 10 via the cable insertion regions 17 are sealed off, deformable sealing elements 24, which are preferably arranged between barrier walls 25 and 26, are positioned in the region of both mutually opposite sides 15 and 16 of the covering body 13 of the inline cable closure 10 on which the cable insertion regions 17 are formed, both in the region of the lower half-shell 11 and in the region of the upper half-shell 12.

A first barrier wall 25 is in each case, namely on both mutually opposite sides 15 and 16 in the region of the lower half-shell 11 and in the region of the upper half-shell 12, remote from the interior 14 of the inline cable closure 10 while a second barrier walls 26 is in each case facing the interior 14 of the cable closure 10.

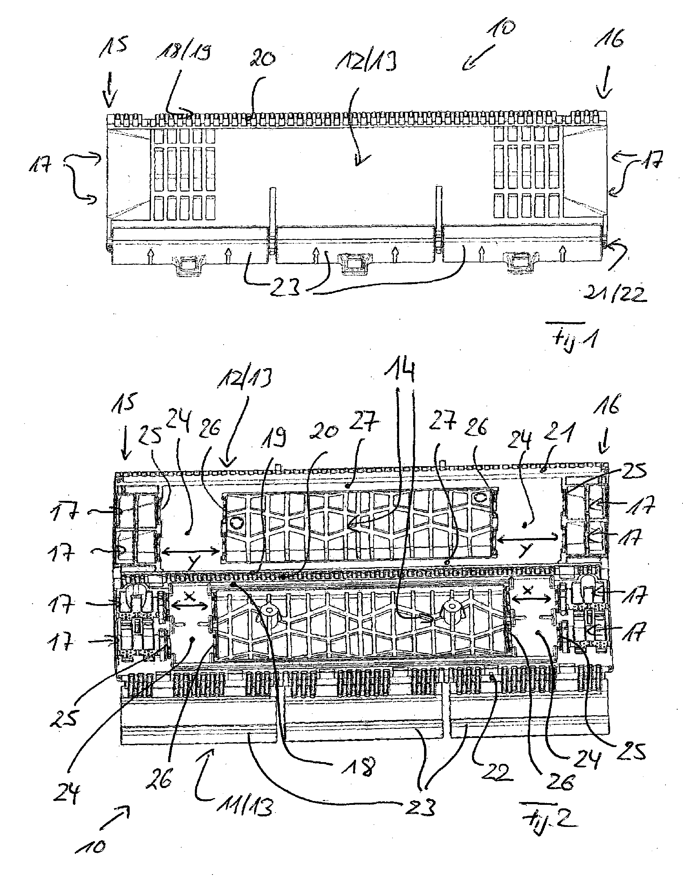

As shown in Figure 2, the sealing elements 24 of the upper half-shell 12, which are associated with the cable insertion regions 17, are coupled via deformable sealing elements 27, which run parallel to longitudinal sides 18, 22 of the upper half-shell 12.

As a result, an annular, closed sealing region is formed by the sealing elements 24 and 27 in the region of the upper half-shell 12. Possibly, an analogous annular sealing region can also be formed in the region of the lower half-shell 11.

The deformable sealing elements 24 and possibly 27 are preferably gel-like sealing elements, for example polyurethane gels or silicone gels. Such gel-like sealing elements are deformable and can be compressible.

It is also possible to use sealing elements 24 which are partially composed of different materials, for example from a deformable, gel-like sealing material and from a foam-like compressible sealing material.

Each of the barrier walls 25 and 26, namely both the barrier walls 25 remote from the interior 14 and the barrier walls 26 facing the interior 14, extends transversely with respect to an insertion direction of the cable insertion regions 17.

As can be seen in Figure 2, in the region of each of the mutually opposite sides 15, 16 of a first one of the half-shells 11, 12 of the covering body 13, namely in the region of the lower half-shells 11, the distance x between the respective barrier wall 26 facing the interior 14 of the cable closure and the respective barrier wall 25 remote from the interior 14 of the cable closure 10 is smaller than the respective distance y between the barrier walls 25, 26 in the region of each of the mutually opposite sides 15, 16 of a second one of the half-shells 11, 12 of the covering body 13, namely in the region of the upper half-shells 12.

When the covering body 13 of the housing is closed by bringing the half-shells 11 and 12 in the position shown in Figure 1, edges of the barrier walls 25 and 26 of the first, lower half-shell 11 extending transversely with respect to the insertion direction of the cable insertion regions 17 contact, namely deform, the respective compressible and/or deformable sealing element 24 positioned between of the barrier walls 25, 26 of the second, upper half-shell 12.

The sealing elements 24 positioned at the mutually opposite sides 15, 16 of the covering body 13 in the area of the cable insertion regions 17 of the first, lower half-shell 11 are made from a first sealing material having a first, preferably a relative low, hardness. The sealing elements 24, 27 positioned in the second half-shell 12 are made at least partially from a second sealing material having a second, preferably a relative high, hardness.

The sealing elements 24 positioned in the first half-shell 11 are made from a sealing material having a Shore 000 hardness smaller than 45 determined under ASTM D 2240 at a temperature of 23°C. The sealing elements 24, 27 positioned in the second half-shell 12 are made at least partially from a sealing material having a Shore 000 hardness larger than 45 determined under ASTM D 2240 at a temperature of 23°C.

The sealing material having a Shore 000 hardness smaller than 45 determined under ASTM D 2240 at a temperature of 23°C preferably has an ultimate elongation larger than 600% determined under EN ISO 527-2.

The sealing material having a Shore 000 hardness larger than 45 determined under ASTM D 2240 at a temperature of 23°C preferably has an ultimate elongation smaller than 600% determined under EN ISO 527-2.

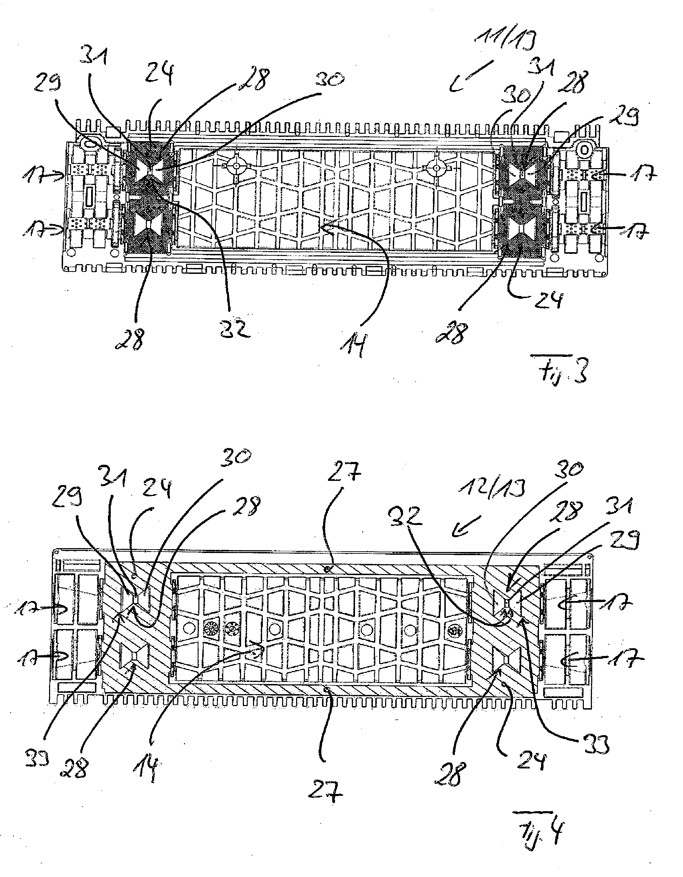

In the embodiment shown in Figures 3 and 4 the sealing elements 24 positioned in the first half-shell 11 are completely made from a first sealing material having a Shore 000 hardness smaller than 35, preferably between 25 and 35, or from a second sealing material having a Shore 000 hardness between 35 and 45 determined under ASTM D 2240 at a temperature of 23°C.

Further on, in the embodiment shown in Figures 3 and 4 the sealing elements 24 including the sealing element 27 positioned in the second half-shell 12 are completely made from a third sealing material having a Shore 000 hardness larger than 45, preferably between 45 and 55, determined under ASTM D 2240 at a temperature of 23°C.

The sealing elements 24 (see e.g. Figures 3 and 4) of both half-shells 11, 12 positioned at the mutually opposite sides 15, 16 of the covering body 13 comprise in the area of the cable insertion regions 17 recesses 28, each recess 28 having at least three subsections, namely a first subsection 29, a second subsection 30 and a third subsection 31. The first subsection 29 of each recess 28 is in each case remote from the interior 14 of the inline cable closure 10 while the second subsection 30 is in each case facing the interior 14 of the inline cable closure 10.

The first subsection 29 of each recess 28 and the second subsection 30 of each recess 28 have both a generally narrowing cross section in such a way that a tapered end 32 of the first subsection 29 is facing a tapered end 32 of the second subsection 30. Preferably, the first subsection 29 of each recess 28 and the second subsection 30 are both conically shaped.

The third subsection 31 of each recess 28 extends between the tapered end 32 of the first subsection 29 and the tapered end 32 of the second subsection 30. The third subsection 31 is preferably cylindrically shaped.

The recesses 28 of Figures 3 and 4 are symmetrically shaped in such a way that the first subsection 29 and the second subsection 30 of the recesses 28 have almost identical shapes and dimensions in radial direction and axial direction of the respective cable insertion region 17.

As shown in Figures 3 and 4, the radial diameter of the tapered end 32 of the first subsection 29 corresponds to the radial diameter of the tapered end 32 of the second subsection 30. In addition, the radial diameter of the widened end 33 of the first subsection 29 corresponds to the radial diameter of the widened end 33 of the second subsection 30. Further on, the axial length of the first subsection 29 corresponds to the axial length of the second subsection 30.

The third subsection 31 of the recess 38 shown in Figures 3 and 4 has a radial diameter corresponding to the radial diameters and of the tapered ends 32 of the first subsection 29 and the second subsection 30. The axial length of the third subsection 31 is smaller than the axial length of the first subsection 29 and the axial length of the second subsection 30.

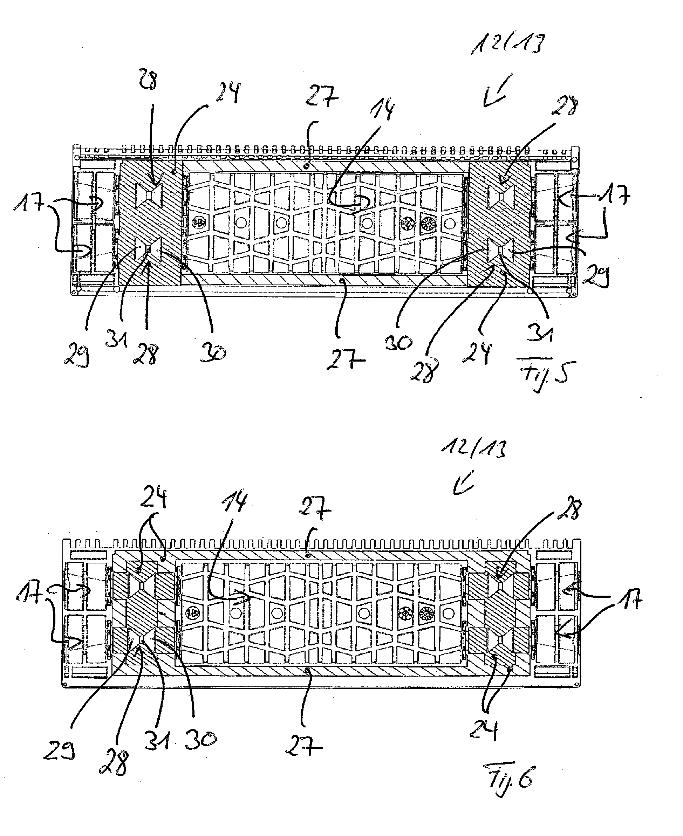

Figure 5 shows an alternative of a second half-shell 12 in which the sealing elements 24 excluding the sealing element 27 positioned in the second half-shell 12 are completely made from the second sealing material having a Shore 000 hardness between 35 and 45 determined under ASTM D 2240 at a temperature of 23°C. In this case, the sealing element 27 positioned in the second half-shell 12 are completely made from the third sealing material having a Shore 000 hardness larger than 45, preferably between 45 and 55, determined under ASTM D 2240 at a temperature of 23°C.

The second half-shell 12 of Figure 5 is preferably used in combination with the first half-shell 11 of Figure 3 in which the sealing elements 24 of the same are completely made from a first sealing material having a Shore 000 hardness smaller than 35, preferably between 25 and 35, or from a second sealing material having a Shore 000 hardness between 35 and 45, each determined under ASTM D 2240 at a temperature of 23°C.

Figure 6 shows another alternative of a second half-shell 12 in which the sealing elements 24 positioned in the second half-shell 12 at the mutually opposite sides 15, 16 of the covering body 13 are partially made from the second sealing material having a Shore 000 hardness between 35 and 45 determined under ASTM D 2240 at a temperature of 23 °C. According to Figure 6, the sealing elements 24 of the second shell 12 are in the area of the recesses 28 made from the second sealing material having a Shore 000 hardness between 35 and 45 and apart from that the same are made from the third sealing material having a Shore 000 hardness larger than 45, preferably between 45 and 55. The sealing element 27 positioned in the second half-shell 12 between the sealing elements 24 are completely made from the third sealing material having a Shore 000 hardness larger than 45, preferably between 45 and 55.

The second half-shell 12 of Figure 6 is preferably used in combination with the first half-shell 11 of Figure 3 in which the sealing elements 24 of the same are completely made from the first sealing material having a Shore 000 hardness smaller than 35, preferably between 25 and 35, or from the second sealing material having a Shore 000 hardness between 35 and 45 determined under ASTM D 2240 at a temperature of 23°C.

It is also possible that in Figure 5 and 6 instead of the second sealing material having a Shore 000 hardness between 35 and 45 the first sealing material having a Shore 000 hardness smaller than 35, preferably between 25 and 35, is used.

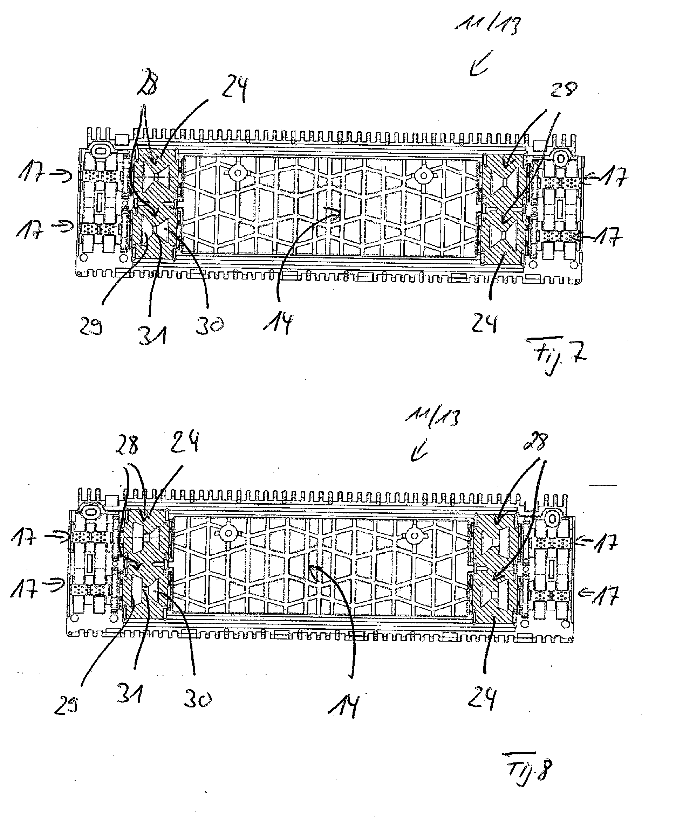

Figures 7 and 8 show first-half shells 11 having alternative recesses 28 formed in the sealing elements 24 of the same. The recesses 28 shown in Figures 7 and 8 are asymmetrically shaped in such a way that the first subsection 29 and the second subsection 30 of the recesses 28 have different dimensions in radial direction of the respective cable insertion region 17.

As shown in Figure 7, the radial diameter of the tapered end 32 of the first subsection 29 corresponds to the radial diameter of the tapered end 32 of the second subsection 30. However, the radial diameter of the widened end 33 of the first subsection 29 is larger than to the radial diameter of the widened end 33 of the second subsection 30. The axial length of the first subsection 29 corresponds to the axial length of the second subsection 30. The third subsection 31 of the recesses 38 shown in Figures 7 has a radial diameter corresponding to the radial diameters and of the tapered ends 32 of the first subsection 29 and the second subsection 30. The axial length of the third subsection 31 is smaller than the axial length of the first subsection and the axial length of the second subsection 30.

As shown in Figure 8, the radial diameter of the tapered end 32 of the first subsection 29 is larger than the radial diameter of the tapered end 32 of the second subsection 30. Further on, the radial diameter of the widened end 33 of the first subsection 29 is larger than to the radial diameter of the widened end 33 of the second subsection 30. In the embodiment of Figure 8, the radial diameter of the tapered end 32 of the first subsection 29 corresponds to the radial diameter of the widened end 33 of the second subsection 30. The axial length of the first subsection 29 corresponds to the axial length of the second subsection 30.

The third subsection 31 of the recess 38 shown in Figure 8 has a radial diameter corresponding to the radial diameter of the tapered end 32 of the second subsection 30. However, this radial diameter of the third subsection 31 is smaller than the radial diameter of the tapered end 32 of the first subsection 29 so that a step-like or graduated transition is provided between the third subsection 31 and the first subsection 29 of the recesses 28. The axial length of the third subsection 31 is smaller than the axial length of the first subsection 29 and the axial length of the second subsection 30.

In the shown embodiment shown, all recesses are symmetrically shaped in axial direction in such a way that the first subsection 29 and the second subsection 30 of each recess 28 have almost identical dimensions in axial direction of the respective cable insertion region 17. The recesses 28 of Figures 3 to 6 are in addition symmetrically shaped in radial direction in such a way that the first subsection 29 and the second subsection 30 of each recess 28 have almost identical dimensions in radial direction of the respective cable insertion region 17.

The recesses 28 of the embodiments shown in Figures 7 and 8 are in contrary asymmetrically shaped in radial direction of the respective cable insertion region 17 in such a way that the first subsection 29 and the second subsection 30 of each recess 29 have different dimensions in radial direction of the respective cable insertion region 17.

Further on, it is possible that the recesses 28 are asymmetrically shaped in axial direction in such a way that the first subsection 29 and the second subsection 30 of each recess 28 have different dimensions in axial lengths m₂₉ and m₃₀ in axial direction of the respective cable insertion region 17.

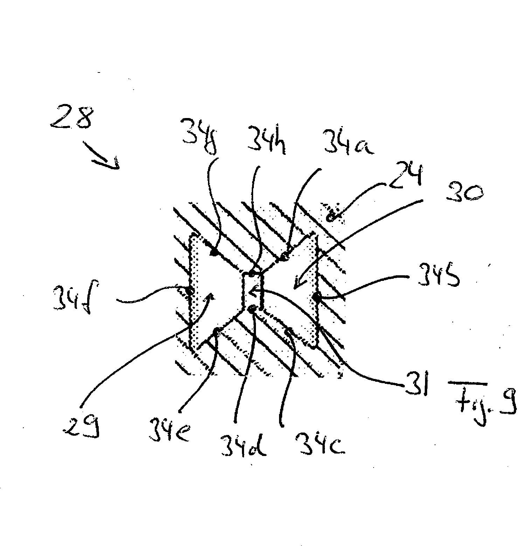

As shown in Figure 9, each recess 28 has walls 34a to 34h formed in the respective sealing element 24, whereby said walls 34a to 34h define an enclosed recess 28.

The walls 34a to 34h formed in the sealing elements 24 provide a continuous surface surrounding the respective recess 28. Each recess 28 is surrounded by one continuous surface of the respective sealing element 24, whereby the continuous surface is defined by the walls 34a to 34h.

Preferably, the sealing elements 24 of both half-shells 11, 12 comprise the recesses 28 in the area of the cable insertion regions 17. In this case, the recesses 28 formed in the sealing elements 24 of a first half-shell 11 and the recesses 28 formed in the sealing elements 24 of a second half-shell 12 have almost identical shapes and dimensions.

It is also possible that the recesses 28 formed in the sealing elements 24 of the first half-shell 11 and the recesses 28 formed in the sealing elements 24 of a second half-shell 12 have different shapes and dimensions.

When the covering body 13 of the housing is closed by bringing the half-shells 11 and 12 each having recesses 28 with almost identical shapes and dimensions in the position shown in Figure 1, the recesses 28 of the half-shells 11 1 and 12 are aligned in such a way that there is no axial and radial offset between the same. In this case, the walls 34a to 34h of such aligned recesses 28 of joined half-shells 11, 12 define an enclosed chamber when the half-shells 11, 12 are joined and the sealing elements 24 of the half-shells 11, 12 are in contact with each other.

**List of reference numerals**

| | | | |
|---|---|---|---|
| 10 | inline cable closure | 34f | wall |
| 11 | shell/lower half-shell | 34g | wall |
| 12 | shell/upper half-shell | 34h | wall |
| 13 | covering body | | |
| 14 | interior | | |
| 15 | side | | |
| 16 | side | | |
| 17 | cable insertion region | | |
| 18 | longitudinal side | | |
| 19 | longitudinal side | | |
| 20 | hinge | | |
| 21 | longitudinal side | | |
| 22 | longitudinal side | | |
| 23 | closing mechanism | | |
| 24 | sealing element | | |
| 25 | barrier wall | | |
| 26 | barrier wall | | |
| 27 | sealing element | | |
| 28 | recess | | |
| 29 | first subsection | | |
| 30 | second subsection | | |
| 31 | third subsection | | |
| 32 | tapered end | | |
| 33 | widened end | | |
| 34a | wall | | |
| 34b | wall | | |
| 34c | wall | | |
| 34d | wall | | |
| 34e | wall | | |

## Claims

1. A cable closure, having a housing which delimits an interior of the cable closure and seals off the cable closure toward the outside, the housing comprising a covering body (13), the covering body (13) comprises shells (11, 12) and provides on mutually opposite sides (15, 16) of the same cable insertion regions (17) for inserting cables into the interior of the cable closure and/or for passing cables out of the interior of the cable closure, wherein deformable sealing elements (24) are positioned at the mutually opposite sides (15, 16) of the covering body (13) in the area of the cable insertion regions (17) of the shells (11, 12), **characterized in that** the sealing elements (24) positioned in the first shell (11) are made from a first sealing material having a first hardness, and that the sealing elements (24, 27) positioned in a second shell (12) are made at least partially from a second sealing material having a second hardness.

2. The cable closure as claimed in claim 1, **characterized in that** the sealing elements (24) positioned in the first shell (11) are made from a sealing material having a relative low hardness, and that the sealing elements (24, 27) positioned in a second shell (12) are made at least partially from a sealing material having a relative high hardness.

3. The cable closure as claimed in claim 1 or 2, **characterized in that** the sealing elements (24) positioned in the first shell (11) are made from a sealing material having a Shore 000 hardness smaller than 45 determined under ASTM D 2240 at a temperature of 23°C.

4. The cable closure as claimed in claim 3, **characterized in that** the sealing elements (24) positioned in the first shell (11) are made from a first sealing material having a Shore 000 hardness smaller than 35, preferably between 25 and 35, or from a second sealing material having a Shore 000 hardness between 35 and 45, each determined under ASTM D 2240 at a temperature of 23 °C.

5. The cable closure as claimed in one of claims 1 to 4, **characterized in that** the sealing elements (24, 27) positioned in the second shell (12) are made at least partially from a sealing material having a Shore 000 hardness larger than 45 determined under ASTM D 2240 at a temperature of 23 °C.

6. The cable closure as claimed in claim 5, **characterized in that** the sealing elements (24) of the second shell (12) being positioned at the mutually opposite sides (15, 16) of the covering body (13) are coupled to one another via deformable sealing elements (27) which run along longitudinal sides of the second shell (12) so as to form an annular sealing region, whereby at least the sealing elements (27) which run along longitudinal sides of the second shell (12) are made from a third sealing material having a Shore 000 hardness larger than 45, preferably between 45 and 55.

7. The cable closure as claimed in claim 5 or 6, **characterized in that** the sealing elements (24) of the second shell (12) being positioned at the mutually opposite sides (15, 16) of the covering body (13) are made at least partially from the second sealing material having a Shore 000 hardness between 35 and 45 and apart from that the same are made from the third sealing material having a Shore 000 hardness larger than 45.

8. The cable closure as claimed in one of claims 3 to 7, **characterized in that** the sealing material having a Shore 000 hardness smaller than 45 determined under ASTM D 2240 has an ultimate elongation larger than 600% determined under EN ISO 527-2, and that the sealing material having a Shore 000 hardness larger than 45 determined under ASTM D 2240 have an ultimate elongation smaller than 600% determined under EN ISO 527-2.

9. The cable closure as claimed in one of claims 1 to 8, **characterized in that** the sealing elements (24) of the shells (11, 12) comprise in the area of the cable insertion regions (17) recesses (28), each recess (28) having at least three subsections, namely a first subsection (29) and a second subsection (30) both having a generally narrowing cross section in such a way that a tapered end (32) of the first subsection (29) is facing a tapered end (32) of the second subsection (30), and a third subsection (31) being almost cylindrically shaped extending between the tapered end (32) of the first subsection (29) and the tapered end (32) of the second subsection (30).

10. The cable closure as claimed in claim 9, **characterized in that** the sealing elements (24) of the first shell (11) are complete made from the first sealing material having a Shore 000 hardness smaller than 35, preferably between 25 and 35, or from the second sealing material having a Shore 000 hardness between 35 and 45, both determined under ASTM D 2240 at a temperature of 23 °C.

11. The cable closure as claimed in claim 9 or 10, **characterized in that** the sealing elements (24) the second shell (12) being positioned at the mutually opposite sides (15, 16) of the covering body (13) are complete made from the second sealing material having a Shore 000 hardness between 35 and 45 or from the third sealing material having a Shore 000 hardness larger than 45, preferably between 45 and 55, both determined under ASTM D 2240 at a temperature of 23°C.

12. The cable closure as claimed in claim 9 or 10, **characterized in that** the sealing elements (24) of the second shell (12) being positioned at the mutually opposite sides (15, 16) of the covering body (13) are in the area of the recesses (28) made from the second sealing material having a Shore 000 hardness between 35 and 45 and apart from that the same are made from the third sealing material having a Shore 000 hardness larger than 45, preferably between 45 and 55.

13. The cable closure as claimed in claim 9, **characterized in that** the sealing elements (24) of the first shell (11) being positioned at the mutually opposite sides (15, 16) of the covering body (13) are complete made from the first sealing material having a Shore 000 hardness smaller than 35, preferably between 25 and 35, and that the sealing elements (24) of the second shell (12) being positioned at the mutually opposite sides (15, 16) of the covering body (13) are in the area of the recesses (28) made from the second sealing material having a Shore 000 hardness between 35 and 45 and apart from that the same are made from the third sealing material having a Shore 000 hardness larger than 45, preferably between 45 and 55.

14. The cable closure as claimed in one of claims 1 to 13, **characterized in that** wherein each of the sealing elements (24) being positioned at the mutually opposite sides (15, 16) of the covering body (13) is positioned between barrier walls (25, 26) of the respective shell (11, 12), namely between a barrier wall (26) facing the interior (14) of the cable closure and a barrier wall (25) remote from the interior (14) of the cable closure.

15. The cable closure as claimed in one of claims 1 to 14, **characterized in that** the deformable sealing elements (24, 27) are gel-like sealing elements.

## Patentansprüche

1. Kabelmuffe mit einer Umhüllung, die einen Innenraum der Kabelmuffe abgrenzt und die Kabelmuffe zum Äußeren hin abdichtet, wobei die Umhüllung einen Ummantelungskörper (13) umfasst, wobei der Ummantelungskörper (13) Hülsen (11, 12) umfasst und an sich gegenüberliegenden Seiten (15, 16) desselben Kabeleinführungsbereiche (17) zum Einführen von Kabeln in den Innenraum der Kabelmuffe und/oder zum Herausführen von Kabeln aus dem Innenraum der Kabelmuffe aufweist, wobei an den sich gegenüberliegenden Seiten (15, 16) des Ummantelungskörpers (13) im Bereich der Kabeleinführungsbereiche (17) der Hülsen (11, 12) verformbare Dichtungselemente (24) angeordnet sind, **dadurch gekennzeichnet, dass** die Dichtungselemente (24), die in der ersten Hülse (11) angeordnet sind, aus einem ersten Dichtungsmaterial bestehen, das eine erste Härte aufweist, und dass die Dichtungselemente (24, 27), die in einer zweiten Hülse (12) angeordnet sind, zumindest teilweise aus einem zweiten Dichtungsmaterial bestehen, das eine zweite Härte aufweist.

2. Kabelmuffe nach Anspruch 1, **dadurch gekennzeichnet, dass** die in der ersten Hülse (11) angeordneten Dichtungselemente (24) aus einem Dichtungsmaterial bestehen, das eine relativ geringe Härte aufweist, und dass die in einer zweiten Hülse (12) angeordneten Dichtungselemente (24, 27) zumindest teilweise aus einem Dichtungsmaterial bestehen, das eine relativ große Härte aufweist.

3. Kabelmuffe nach Anspruch 1 oder 2, **dadurch gekennzeichnet, dass** die in der ersten Hülse (11) angeordneten Dichtungselemente (24) aus einem Dichtungsmaterial bestehen, das eine nach ASTM D 2240 bei einer Temperatur von 23 °C bestimmte Shore-Härte 000 kleiner als 45 aufweist.

4. Kabelmuffe nach Anspruch 3, **dadurch gekennzeichnet, dass** die in der ersten Hülse (11) angeordneten Dichtungselemente (24) aus einem ersten Dichtungsmaterial bestehen, das eine Shore-Härte 000 kleiner als 35 aufweist, vorzugsweise zwischen 25 und 35, oder aus einem zweiten Dichtungsmaterial, das eine Shore-Härte 000 zwischen 35 und 45 aufweist, die jeweils nach ASTM D 2240 bei einer Temperatur von 23 °C bestimmt wurden.

5. Kabelmuffe nach einem der Ansprüche 1 bis 4, **dadurch gekennzeichnet, dass** die in der zweiten Hülse (12) angeordneten Dichtungselemente (24, 27) zumindest teilweise aus einem Dichtungsmaterial bestehen, das eine nach ASTM D 2240 bei einer Temperatur von 23 °C bestimmte Shore-Härte 000 größer als 45 aufweist.

6. Kabelmuffe nach Anspruch 5, **dadurch gekennzeichnet, dass** die Dichtungselemente (24) der zweiten Hülse (12), die an den sich gegenüberliegenden Seiten (15, 16) des Ummantelungskörpers (13) angeordnet sind, mittels verformbarer Dichtungselemente (27) miteinander gekoppelt sind, die derart entlang von Längsseiten der zweiten Hülse (12) verlaufen, dass ein ringförmiger Dichtungsbereich gebildet ist, wobei mindestens die Dichtungselemente (27), die entlang von Längsseiten der zweiten Hülse (12) verlaufen, aus einem dritten Dichtungsmaterial bestehen, das eine Shore-Härte 000 größer als 45, vorzugsweise zwischen 45 und 55, aufweist.

7. Kabelmuffe nach Anspruch 5 oder 6, **dadurch gekennzeichnet, dass** die Dichtungselemente (24) der zweiten Hülse (12), die an den sich gegenüberliegenden Seiten (15, 16) des Ummantelungskörpers (13) angeordnet sind, zumindest teilweise aus dem zweiten Dichtungsmaterial bestehen, das eine Shore-Härte 000 zwischen 35 und 45 aufweist, und dieselben außerdem aus dem dritten Dichtungsmaterial bestehen, das eine Shore-Härte 000 größer als 45 aufweist.

8. Kabelmuffe nach einem der Ansprüche 3 bis 7, **dadurch gekennzeichnet, dass** das Dichtungsmaterial, das eine nach ASTM D 2240 bestimmte Shore-Härte 000 kleiner als 45 aufweist, eine nach EN ISO 527-2 bestimmte Reißdehnung größer als 600 % aufweist, und dass das Dichtungsmaterial, das eine nach ASTM D 2240 bestimmte Shore-Härte 000 größer als 45 aufweist, eine nach EN ISO 527-2 bestimmte Reißdehnung kleiner als 600 % aufweist.

9. Kabelmuffe nach einem der Ansprüche 1 bis 8, **dadurch gekennzeichnet, dass** die Dichtungselemente (24) der Hülsen (11, 12) im Bereich der Kabeleinführungsbereiche (17) Vertiefungen (28) umfassen, wobei jede Vertiefung (28) mindestens drei Unterabschnitte aufweist, nämlich einen ersten Unterabschnitt (29) und einen zweiten Unterabschnitt (30), die jeweils einen sich im Allgemeinen verengenden Querschnitt derart aufweisen, dass ein verjüngtes Ende (32) des ersten Unterabschnitts (29) einem verjüngten Ende (32) des zweiten Unterabschnitts (30) zugewandt ist, sowie einen dritten Unterabschnitt (31), der fast zylinderförmig ist und sich zwischen dem verjüngten Ende (32) des ersten Unterabschnitts (29) und dem verjüngten Ende (32) des zweiten Unterabschnitts (30) erstreckt.

10. Kabelmuffe nach Anspruch 9, **dadurch gekennzeichnet, dass** die Dichtungselemente (24) der ersten Hülse (11) vollständig aus dem ersten Dichtungsmaterial bestehen, das eine Shore-Härte 000 kleiner als 35, vorzugsweise zwischen 25 und 35, aufweist, oder aus dem zweiten Dichtungsmaterial, das eine Shore-Härte 000 zwischen 35 und 45 aufweist, die jeweils nach ASTM D 2240 bei einer Temperatur von 23 °C bestimmt wurden.

11. Kabelmuffe nach Anspruch 9 oder 10, **dadurch gekennzeichnet, dass** die Dichtungselemente (24) der zweiten Hülse (12), die an den sich gegenüberliegenden Seiten (15, 16) des Ummantelungskörpers (13) angeordnet sind, vollständig aus dem zweiten Dichtungsmaterial bestehen, das eine Shore-Härte 000 zwischen 35 und 45 aufweist, oder aus dem dritten Dichtungsmaterial, das eine Shore-Härte 000 größer als 45, vorzugsweise zwischen 45 und 55, aufweist, die jeweils nach ASTM D 2240 bei einer Temperatur von 23 °C bestimmt wurden.

12. Kabelmuffe nach Anspruch 9 oder 10, **dadurch gekennzeichnet, dass** die Dichtungselemente (24) der zweiten Hülse (12), die an den sich gegenüberliegenden Seiten (15, 16) des Ummantelungskörpers (13) angeordnet sind, im Bereich der Vertiefungen (28) aus dem zweiten Dichtungsmaterial bestehen, das eine Shore-Härte 000 zwischen 35 und 45 aufweist, und dieselben außerdem aus dem dritten Dichtungsmaterial bestehen, das eine Shore-Härte 000 größer als 45, vorzugsweise zwischen 45 und 55, aufweist.

13. Kabelmuffe nach Anspruch 9, **dadurch gekennzeichnet, dass** die Dichtungselemente (24) der ersten Hülse (11), die an den sich gegenüberliegenden Seiten des Ummantelungskörpers (13) angeordnet sind, vollständig aus dem ersten Dichtungsmaterial bestehen, das eine Shore-Härte 000 kleiner als 35, vorzugsweise zwischen 25 und 35, aufweist, und dass die Dichtungselemente (24) der zweiten Hülse (12), die an den sich gegenüberliegenden Seiten (15, 16) des Ummantelungskörpers (13) angeordnet sind, im Bereich der Vertiefungen (28) aus dem zweiten Dichtungsmaterial bestehen, das eine Shore-Härte 000 zwischen 35 und 45 aufweist, und dieselben außerdem aus dem dritten Dichtungsmaterial bestehen, das eine Shore-Härte 000 größer als 45, vorzugsweise zwischen 45 und 55, aufweist.

14. Kabelmuffe nach einem der Ansprüche 1 bis 13, **dadurch gekennzeichnet, dass** jedes der Dichtungselemente (24), die an den sich gegenüberliegenden Seiten (15, 16) des Ummantelungskörpers (13) angeordnet sind, zwischen Sperrwänden (25, 26) der entsprechenden Hülse (11, 12) angeordnet ist, nämlich zwischen einer Sperrwand (26), die dem Innenraum (14) der Kabelmuffe zugewandt ist, und einer Sperrwand (25), die vom Innenraum (14) der Kabelmuffe abgewandt ist.

15. Kabelmuffe nach einem der Ansprüche 1 bis 14, **dadurch gekennzeichnet, dass** die verformbaren Dichtungselemente (24, 27) gelartige Dichtungselemente sind.

## Revendications

1. Fermeture de câble ayant un boîtier qui délimite un intérieur de la fermeture de câble et scelle la fermeture de câble par rapport à l'extérieur, le boîtier comprenant un corps de recouvrement (13), le corps de recouvrement (13) comprenant des coques (11, 12) et disposant, sur des côtés mutuellement opposés (15, 16) de celui-ci, des régions d'insertion de câbles (17) pour insérer des câbles à l'intérieur de la fermeture de câble et/ou pour faire passer des câbles hors de l'intérieur de la fermeture de câble, des éléments d'étanchéité déformables (24) étant positionnés au niveau des côtés mutuellement opposés (15, 16) du corps de recouvrement (13), dans la zone des régions d'insertion de câbles (17) des coques (11, 12), **caractérisée en ce que** les éléments d'étanchéité (24) positionnés dans la première coque (11) sont fabriqués en un premier matériau d'étanchéité ayant une première dureté et **en ce que** les éléments d'étanchéité (24, 27) positionnés dans une deuxième coque (12) sont fabriqués au moins en partie en un deuxième matériau d'étanchéité ayant une deuxième dureté.

2. Fermeture de câble selon la revendication 1, **caractérisée en ce que** les éléments d'étanchéité (24) positionnés dans la première coque (11) sont fabriqués en un matériau d'étanchéité ayant une relativement faible dureté et **en ce que** les éléments d'étanchéité (24, 27) positionnés dans une deuxième coque (12) sont fabriqués au moins en partie en un matériau d'étanchéité ayant une relativement grande dureté.

3. Fermeture de câble selon la revendication 1 ou 2, **caractérisée en ce que** les éléments d'étanchéité (24) positionnés dans la première coque (11) sont fabriqués en un matériau d'étanchéité ayant une dureté Shore 000 inférieure à 45, déterminée conformément à la norme ASTM D 2240 à une température de 23°C.

4. Fermeture de câble selon la revendication 3, **caractérisée en ce que** les éléments d'étanchéité (24) positionnés dans la première coque (11) sont fabriqués en un premier matériau d'étanchéité ayant une dureté Shore 000 inférieure à 35, de préférence comprise entre 25 et 35, ou en un deuxième matériau d'étanchéité ayant une dureté Shore 000 comprise entre 35 et 45, chacune étant déterminée conformément à la norme ASTM D 2240 à une température de 23°C.

5. Fermeture de câble selon l'une quelconque des revendications 1 à 4, **caractérisée en ce que** les éléments d'étanchéité (24, 27) positionnés dans la deuxième coque (12) sont fabriqués au moins en partie en un matériau d'étanchéité ayant une dureté Shore 000 supérieure à 45, déterminée conformément à la norme ASTM D 2240 à une température de 23°C.

6. Fermeture de câble selon la revendication 5, **caractérisée en ce que** les éléments d'étanchéité (24) de la deuxième coque (12) qui sont positionnés au niveau des côtés mutuellement opposés (15, 16) du corps de recouvrement (13) sont accouplés les uns aux autres par le biais d'éléments d'étanchéité déformables (27) qui s'étendent le long de côtés longitudinaux de la deuxième coque (12) de manière à former une région d'étanchéité annulaire, au moins les éléments d'étanchéité (27) qui s'étendent le long de côtés longitudinaux de la deuxième coque (12) étant fabriqués en un troisième matériau d'étanchéité ayant une dureté Shore 000 supérieure à 45, de préférence comprise entre 45 et 55.

7. Fermeture de câble selon la revendication 5 ou 6, **caractérisée en ce que** les éléments d'étanchéité (24) de la deuxième coque (12) qui sont positionnés au niveau des côtés mutuellement opposés (15, 16) du corps de recouvrement (13) sont fabriqués au moins en partie en le deuxième matériau d'étanchéité ayant une dureté Shore 000 comprise entre 35 et 45 et à part cela, ceux-ci sont fabriqués en le troisième matériau d'étanchéité ayant une dureté Shore 000 supérieure à 45.

8. Fermeture de câble selon l'une quelconque des revendications 3 à 7, **caractérisée en ce que** le matériau d'étanchéité ayant une dureté Shore 000 inférieure à 45, déterminée conformément à la norme ASTM D 2240, a un allongement à la rupture supérieur à 600 %, déterminé conformément à la norme EN ISO 527-2, et **en ce que** le matériau d'étanchéité ayant une dureté Shore 000 supérieure à 45, déterminée conformément à la norme ASTM D 2240, a un allongement à la rupture inférieur à 600 %, déterminé conformément à la norme EN ISO 527-2.

9. Fermeture de câble selon l'une quelconque des revendications 1 à 8, **caractérisée en ce que** les éléments d'étanchéité (24) des coques (11, 12) comprennent, dans la zone des régions d'insertion de câbles (17), des retraits (28), chaque retrait (28) ayant au moins trois sous-sections, à savoir une première sous-section (29) et une deuxième sous-section (30), toutes deux ayant une section transversale se rétrécissant généralement de telle sorte qu'une extrémité effilée (32) de la première sous-section (29) soit en regard d'une extrémité effilée (32) de la deuxième sous-section (30), et une troisième sous-section (31) de forme pratiquement cylindrique, s'étendant entre l'extrémité effilée (32) de la première sous-section (29) et l'extrémité effilée (32) de la deuxième sous-section (30).

10. Fermeture de câble selon la revendication 9, **caractérisée en ce que** les éléments d'étanchéité (24) de la première coque (11) sont complètement fabriqués en le premier matériau d'étanchéité ayant une dureté Shore 000 inférieure à 35, de préférence comprise entre 25 et 35, ou en le deuxième matériau d'étanchéité ayant une dureté Shore 000 comprise entre 35 et 45, toutes deux déterminées conformément à la norme ASTM D 2240 à une température de 23°C.

11. Fermeture de câble selon la revendication 9 ou 10, **caractérisée en ce que** les éléments d'étanchéité (24) de la deuxième coque (12) qui sont positionnés au niveau des côtés mutuellement opposés (15, 16) du corps de recouvrement (13) sont complètement fabriqués en le deuxième matériau d'étanchéité ayant une dureté Shore 000 comprise entre 35 et 45 ou en le troisième matériau d'étanchéité ayant une dureté Shore 000 supérieure à 45, de préférence comprise entre 45 et 55, toutes deux déterminées conformément à la norme ASTM D 2240 à une température de 23°C.

12. Fermeture de câble selon la revendication 9 ou 10, **caractérisée en ce que** les éléments d'étanchéité (24) de la deuxième coque (12) qui sont positionnés au niveau des côtés mutuellement opposés (15, 16) du corps de recouvrement (13) sont, dans la zone des retraits (28), fabriqués en le deuxième matériau d'étanchéité ayant une dureté Shore 000 comprise entre 35 et 45 et à part cela, ceux-ci sont fabriqués en le troisième matériau d'étanchéité ayant une dureté Shore 000 supérieure à 45, de préférence comprise entre 45 et 55.

13. Fermeture de câble selon la revendication 9, **caractérisée en ce que** les éléments d'étanchéité (24) de la première coque (11) qui sont positionnés au niveau des côtés mutuellement opposés (15, 16) du corps de recouvrement (13) sont complètement fabriqués en le premier matériau d'étanchéité ayant une dureté Shore 000 inférieure à 35, de préférence comprise entre 25 et 35, et **en ce que** les éléments d'étanchéité (24) de la deuxième coque (12) qui sont positionnés au niveau des côtés mutuellement opposés (15, 16) du corps de recouvrement (13) sont, dans la zone des retraits (28), fabriqués en le deuxième matériau d'étanchéité ayant une dureté Shore 000 comprise entre 35 et 45 et à part cela, ceux-ci sont fabriqués en le troisième matériau d'étanchéité ayant une dureté Shore 000 supérieure à 45, de préférence comprise entre 45 et 55.

14. Fermeture de câble selon l'une quelconque des revendications 1 à 13, **caractérisée en ce que** chacun des éléments d'étanchéité (24) qui sont positionnés au niveau des côtés mutuellement opposés (15, 16) du corps de recouvrement (13) est positionné entre des parois formant barrière (25, 26) de la coque respective (11, 12), à savoir entre une paroi formant barrière (26) en regard de l'intérieur (14) de la fermeture de câble et une paroi formant barrière (25) éloignée de l'intérieur (14) de la fermeture de câble.

15. Fermeture de câble selon l'une quelconque des revendications 1 à 4, **caractérisée en ce que** les éléments d'étanchéité déformables (24, 27) sont des éléments d'étanchéité de type gel.
